# EUROPEAN PATENT APPLICATION

(11) **EP 2 884 649 A1**
(43) Date of publication of application: **17.06.2015**
(21) Application number: 13827584.7
(22) Date of filing: 27.06.2013
(51) Int. Cl.: H02M 7/48

(54) **INVERTER DRIVE CIRCUIT**

(30) Priority: 08.08.2012 JP 2012175847
(71) Applicant: Sharp Kabushiki Kaisha, Osaka-shi, Osaka 545-8522 (JP)
(72) Inventor: KIHARA Seiichiro, Osaka-shi, Osaka 545-8522 (JP)
(74) Representative: Treeby, Philip David William
(86) International application number: PCT/JP2013/067605
(87) International publication number: WO 2014/024596

(57) **Abstract**

An inverter drive circuit is equipped with a switching element for each of the upper and lower arms connected in series between the positive electrode and the negative electrode of a DC power source, and a driver circuit for controlling the switching on and off of the switching elements, according to a control signal imparted to each of the switching elements, has a load connected to the connection point between the switching elements of the upper and lower arms, converts the DC-power-source power into AC through the switching on and off, and supplies said power to the load. Therein, the driver circuit compares the voltage of each terminal at both ends of the switching elements, and controls on the basis of the comparison result and the control signal.

## Description

### Technical Field

The present invention relates to an inverter drive circuit that converts a voltage by driving a switching element.

### Background Art

As a method for controlling motors used in home appliances such as an air conditioner, a refrigerator and the like, an inverter method is widely used, which can perform sophisticated control by means of a micro-computer. An IGBT [Insulated Gate Bipolar Transistor] is widely used as a switching element in an inverter drive circuit that achieve the control method.

Besides, also an IPM [Intelligent Power Module], in which the IGBT and its driver IC are packaged, is widely used in air conditioners and the like. As wide band gap semiconductor elements such as a SiCFET [Silicon Carbide FET], a GaNFET [Gallium Nitride FET] and the like are put into practical use, incorporating these elements into the IPM is under study to achieve efficiency improvement by means of their low on-resistances and high-frequency characteristics.

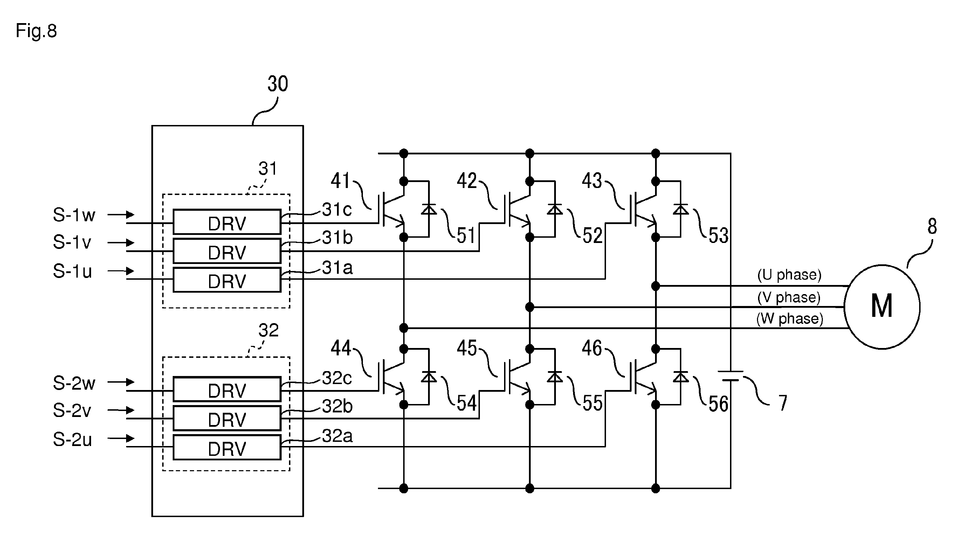

As an example of the inverter drive circuit, as shown in Fig. 8, there is a three-phase inverter drive circuit which is composed of a driver circuit unit 30, IGBTs 41 to 46, and FWDs [Free-Wheeling Diode] 51 to 56. This inverter drive circuit converts DC (Direct Current) power supplied from a DC power source 7 into an AC (Alternate Current), outputs the AC to a motor 8, and thereby drives the motor 8. In the meantime, the IGBTs 41 to 43 are upper-arm switching elements, and the IGBTs 44 to 46 are lower-arm switching elements.

The driver circuit unit 30 has a driver circuit group 31 for the upper arm and a driver circuit group 32 for the lower arm. Besides, the driver circuit unit 30 is given control signals (S-1u, S-1v, S-1w) for the upper arm and control signals (S-2u, S-2v, S-2w) for the lower arm from outside.

In the meantime, the driver circuit group 31 for the upper arm includes: a driver circuit 31a into which the control signal S-1u is input and which outputs a gate signal to the IGBT 43; a driver circuit 31b into which the control signal S-1v is input and which outputs a gate signal to the IGBT 42; and a driver circuit 31c into which the control signal S-1w is input and which outputs a gate signal to the IGBT 41.

Besides, the driver circuit group 32 for the lower arm includes: a driver circuit 32a into which the control signal S-2u is input and which outputs a gate signal to the IGBT 46; a driver circuit 32b into which the control signal S-2v is input and which outputs a gate signal to the IGBT 45; and a driver circuit 32c into which the control signal S-2w is input and which outputs a gate signal to the IGBT 44.

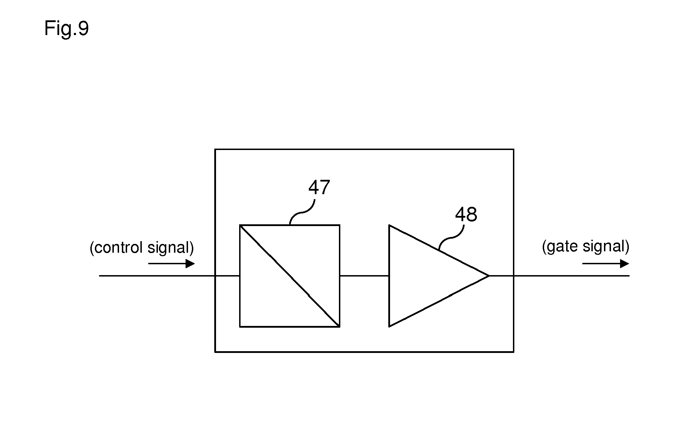

Besides, each driver circuit (31a to 31c, 32a to 32c) is composed of a level shift circuit 47 and an output driver 48 as shown in Fig. 9. The level shift circuit 47 adjusts a voltage level of the control signal to be input to match an input voltage level for the output driver 48. The output driver 48 generates an output voltage (gate signal) to be given to a gate of the IGBT in accordance with an output from the level shift circuit 47.

Besides, the FWD 51 corresponds to the IGBT 41, the FWD 52 corresponds to the IGBT 42, the FWD 53 corresponds to the IGBT 43, the FWD 54 corresponds to the IGBT 44, the FWD 55 corresponds to the IGBT 45, and the FWD 56 corresponds to the IGBT 46. Collector and emitter terminals of each IGBT (41 to 46) are connected to cathode and anode terminals of the corresponding FWDs 51 to 56, respectively.

The collector terminals of the IGBTs 41 to 43 of the upper arm are connected to a positive electrode terminal of the DC power source 7. The emitter terminals of the IGBTs 44 to 46 of the lower arm are connected to a negative electrode terminal of the DC power source 7. The emitter terminal of the IGBT 41 is connected to the collector terminal of the IGBT 44 and a W-phase terminal of the motor 8. The emitter terminal of the IGBT 42 is connected to the collector terminal of the IGBT 45 and a V-phase terminal of the motor 8. The emitter terminal of the IGBT 43 is connected to the collector terminal of the IGBT 46 and a U-phase terminal of the motor 8.

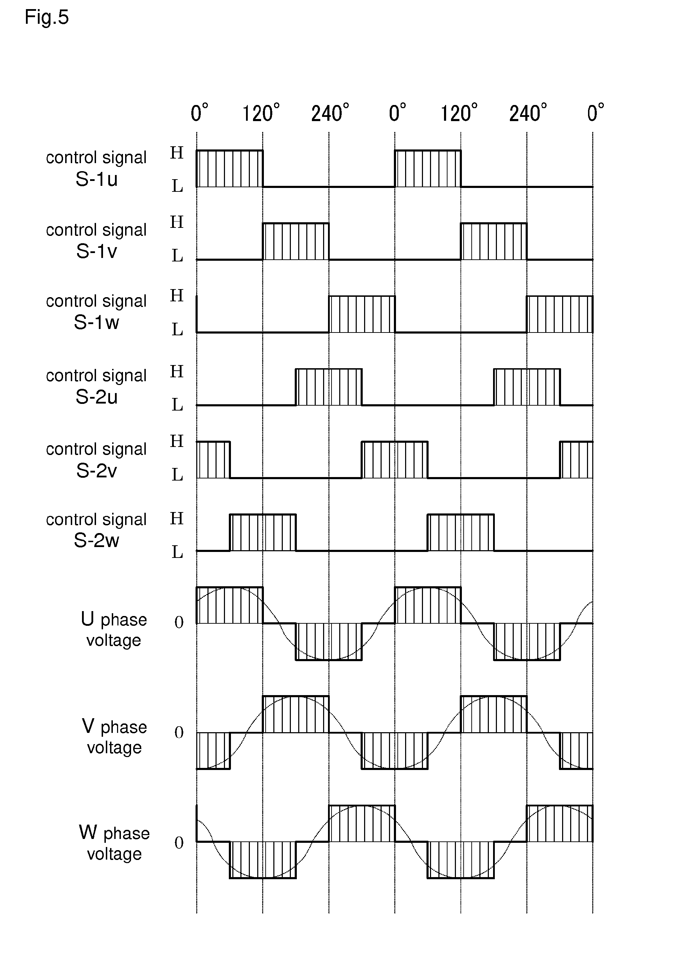

In the inverter drive circuit having the above structure, when the IGBT is turned off, energy stored in the motor 8 flows backward as an electric current via the FWD. Next, operation of the above inverter drive circuit is described with reference to a timing chart of Fig. 5.

As shown in Fig. 5, each control signal represents a rectangular waveform drive signal for the motor 8. The control signal S-1u is a signal that undergoes PWM modulation in a 0-120° section, the control signal S-1v is a signal that undergoes PWM modulation in a 120-240° section, and the control signal S-1w is a signal that undergoes PWM modulation in a 240-0° section. Besides, the control signal S-2u is a signal that undergoes PWM modulation in a 180-300° section, the control signal S-2v is a signal that undergoes PWM modulation in a 300-60° section, and the control signal S-2w is a signal that undergoes PWM modulation in a 60-180° section.

The gate signals are generated in accordance with these control signals and each IGBT 41 to 46 performs an switching operation, so that a U-phase voltage, a V-phase voltage, and a W-phase voltage shown in Fig. 5 are output to the U-phase terminal, V-phase terminal, and W-phase terminal of the motor 8, respectively. The U-phase voltage, V-phase voltage, and W-phase voltage are each approximated to a sine waveform and output; accordingly, it is possible to drive the motor 8.

Here, for example, looking at the U phase, in a 120-180° section, a reflux current flows to the motor 8 via the FWD 56. Besides, in a 300-0° section, a reflux current flows from the motor 8 via the FWD 53. It also applies to the V phase and the W phase that the reflux current flows in this way. Here, a power loss occurs which corresponds to a product of a forward voltage VF of each FWD and a reflux current ID. In the following description, such a power loss is called a "first loss."

Besides, for example, there is an aspect in which the IGBT 42 is turned on after a forward current flows in the FWD 56; an electric current flows successively in the collector terminal and emitter terminal of the IGBT 42, further flows from the V-phase terminal to U-phase terminal of the motor 8. In this aspect, a backward saturation current flows from the cathode terminal to anode terminal of the FWD 56, which turns into a short-circuit current from the upper arm to the lower arm. Such a phenomenon occurs in each FWD, and in each phenomenon, a power loss occurs which corresponds to a product of the voltage across the DC power source 7 and the short-circuit current. In the following description, such a power loss is called a "second loss."

Form the viewpoint of power saving and the like, it is desirable that the above power loss is curbed as small as possible. Accordingly, for example, to reduce the first loss, there is a case where a SBD (Schottky Barrier Diode) having a low forward voltage VF is used as the FWD.

Besides, for example, to reduce the second loss, there is a case where a FRD (First Recovery Diode) excellent in backward recovery characteristic is used as the FWD. Besides, an apparatus is invented (see patent document 1), in which a backward voltage application device is disposed in each FWD and a small backward voltage is applied to curb a loss due to a backward recovery current low.

Besides, because of a low on-resistance compared with the IGBT, there is a case where a MOSEFT [Metal Oxide Semiconductor FET] is used as the switching element. But, generally, the backward recovery characteristic of a parasitic diode of a MOSFET is not very good; accordingly, it is necessary to prevent the parasitic diode from operating by using a FWD which has a lower forward voltage VF than an incorporated diode. Besides, also a MOSFET is developed which is improved in the backward recovery of the incorporated diode and does not need the FWD.

### Citation List

### Patent Literature

PLT1: JP-A-H10-327585

### Summary of Invention

### Technical Problem

In an inverter drive circuit that drives inductive loads such as a motor and the like, because a switching element is driven to convert a DC voltage into an AC voltage, an electric current occurring in a coil attempts to flow backward in the switching element when a circuit of the motor is switched. In a case where the switching element is a MOSFET, the backward recovery characteristic of the parasitic diode is poor; accordingly, it is necessary to make the current escape by using an external FWD.

Besides, in a case where the switching element is an IGBT, it is impossible to make an electric current flow in a backward direction; accordingly, an external FWD is necessary. Power occurring in this FWD becomes the above first loss in the inverter drive circuit. In a case where a SBD is used as the FWD, because the forward voltage VF is low, the first loss is small; however, because a backward-direction leak current is large compared with a general diode, the above second loss becomes large. Besides, after the above current flows in the FWD, a phenomenon occurs, in which a backward current flows in the FWD because of the backward recovery characteristic of the FWD, and a power loss due to a short-circuit current at this time becomes the second loss of the inverter drive circuit.

The above power loss becomes large because the FWD is usually used. Besides, even in a case where any one of the above switching elements is used to form the inverter drive circuit, the FWD becomes necessary. Therefore, efficiency deterioration of the inverter drive circuit due to such a power loss is a problem. Besides, in the case where the FWD is used, the number of components increases the more, which is undesirable from the viewpoint of production cost and the like.

Besides, in the case where the above MOSFET improved in the backward recovery characteristic of the incorporated diode is used as the switching element, it becomes possible to remove the FWD. But, in this case, the employable switching element is extremely restricted, so that it becomes impossible to employ a general MOSFET and the like. In the meantime, the MOSFET, which is improved in the backward recovery characteristic of the incorporated diode and does not need the FWD, is expensive compared with a general MOSFET and the like, and the kinds are limited.

In light of the above problems, it is an object of the present invention to provide an inverter drive circuit that avoids the restriction on an employable switching element as much as possible and removes a FWD to facilitate achievement of reduction in power loss and the like.

### Solution to Problem

An inverter drive circuit according to the present invention comprises: respective switching elements of upper and lower arms connected in series between a positive electrode and a negative electrode of a DC (Direct Current) power source, a driver circuit that performs on/off switching control of the switching elements in accordance with a control signal given for each of the switching elements, wherein a load is connected to a connection point between the switching elements of the upper and lower arms, power from the DC power source is converted into an AC (Alternate Current) by the on/off switching and the AC is supplied to the load, and the driver circuit compares voltages of respective terminals at both ends of the switching element and performs the control based on a result of the comparison and the control signal.

According to the present structure, it becomes easy to avoid the restriction on an employable switching element as much as possible and achieve reduction in the power loss and the like by removing the FWD.

Besides, as the above structure, more specifically, a structure may be employed, in which the driver circuit decides an on-control period for each of the switching elements based on the result of the comparison, and turns on the switching element irrespective of content of the control signal during the on-control period.

Besides, as the above structure, more specifically, a structure may be employed, in which as to the switching element of the upper arm, the driver circuit decides a period, during which the voltage of the terminal connected to the load is larger than a voltage of a terminal connected to the positive electrode of the DC power source, as the on-control period.

Besides, as the above structure, more specifically, a structure may be employed, in which as to the switching element of the lower arm, the driver circuit decides a period, during which the voltage of the terminal connected to the negative electrode of the DC power source is larger than the voltage of the terminal connected to the load, as the on-control period.

Besides, as the above structure, more specifically, a structure may be employed, in which the driver circuit performs control to turn on the switching element when the control signal indicates "on", and performs control to turn off the switching element when the control signal indicates "off", and reflects the content of the control signal for the switching element of another one of the upper and lower arms into a decision of the on-control period for the switching element of one of the upper and lower arms.

Besides, as the above structure, more specifically, a structure may be employed, in which as to the switching element of the upper arm, the driver circuit decides a period, during which the voltage of the terminal connected to the load is larger than the voltage of the terminal connected to the positive electrode of the DC power source and the control signal for the switching element of the lower arm indicates "off", as the on-control period.

Besides, as the above structure, more specifically, a structure may be employed, in which as to the switching element of the lower arm, the driver circuit decides a period, during which the voltage of the terminal connected to the negative electrode of the DC power source is larger than the voltage of the terminal connected to the load and the control signal for the switching element of the upper arm indicates "off", as the on-control period.

Besides, as the above structure, more specifically, a structure may be employed, in which the switching element is an N type MOSFET that has a drain terminal and a source terminal as each of the terminals. Besides, as the above structure, more specifically, a structure may be employed, in which the switching element is an N type GaNFET that has a drain terminal and a source terminal as each of the terminals.

Besides, as the above structure, more specifically, a structure may be employed, in which the driver circuit has a voltage comparison circuit that performs the comparison, and performs the control based on a logic operation that uses inputs of the control signal given from outside and an output signal from the voltage comparison circuit.

### Advantageous Effects of Invention

According to the inverter drive circuit of the present invention, it becomes easy to avoid the restriction on an employable switching element as much as possible and remove the FWD to facilitate the achievement of reduction in power loss and the like.

### Brief Description of Drawings

[Fig. 1] is a structural view of an inverter drive circuit according to a first embodiment.
[Fig. 2] is a graph relevant to a static characteristic of a GaNFET of normally on type.
[Fig. 3] is a graph relevant to a static characteristic of a MOSFET.
[Fig. 4] is a structural view of a driver circuit unit according to the first embodiment.
[Fig. 5] is a timing chart relevant to a control signal and the like.
[Fig. 6] is a structural view of an inverter drive circuit according to a second embodiment.
[Fig. 7] is a structural view of a driver circuit unit according to the second embodiment.
[Fig. 8] is a structural view of an inverter drive circuit according to a conventional example.
[Fig. 9] is a structural view of a driver circuit according to a conventional example.

### Description of Embodiments

As to embodiments of the present invention, a first embodiment and a second embodiment are hereinafter described as examples with reference to each drawing.

### <First embodiment>

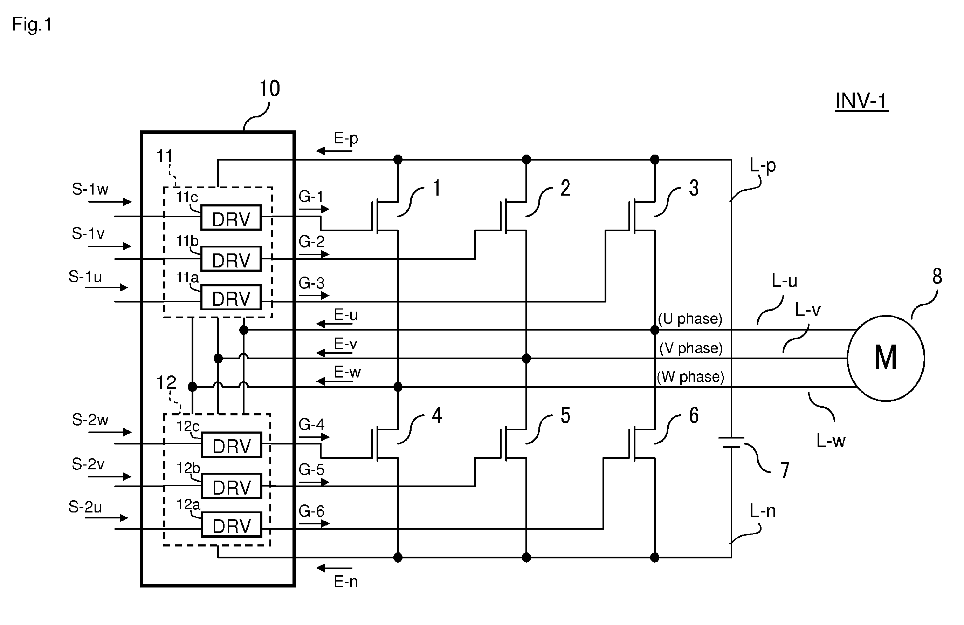

First, a first embodiment of the present invention is described. Fig. 1 is a structural view of a three-phase inverter drive circuit INV-1 according to the first embodiment. As shown in Fig. 1, the inverter drive circuit INV-1 includes each switching element 1 to 6, a driver circuit unit 10 and the like.

The inverter drive circuit INV-1 is connected to a DC (Direct Current) power source 7 and a motor 8, converts a DC voltage supplied from the DC power source 7 in to an AC (Alternate Current), and outputs the AC to the motor 8 to drive the motor 8. In the meantime, the motor 8 is an inductive load having a coil and generates a reflux current when a circuit connected to the motor 8 is switched.

Each switching element 1 to 6 is an N type GaNFET of normally on type and performs on/off switching in accordance with a gate signal input into a gate terminal (switching of conduction/shutdown between a drain terminal and a source terminal). However, the kind of the switching element 1 to 6 is not limited to this, but may be an N type MOSFET or the like.

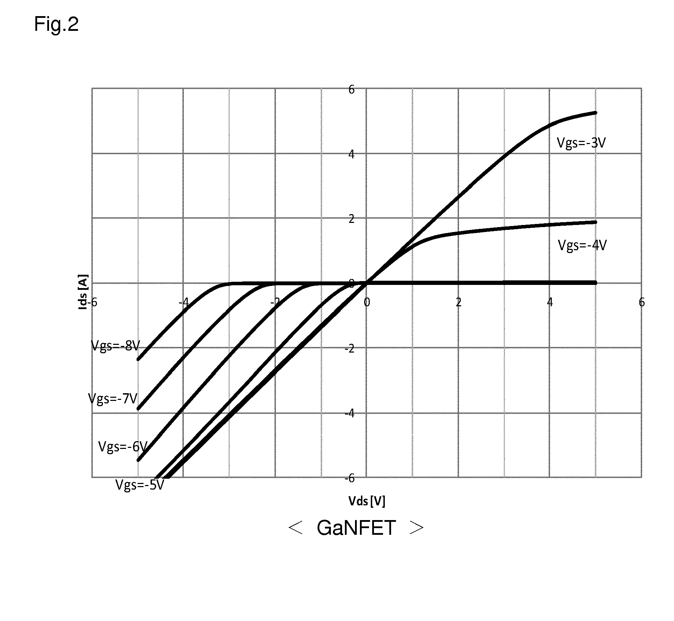

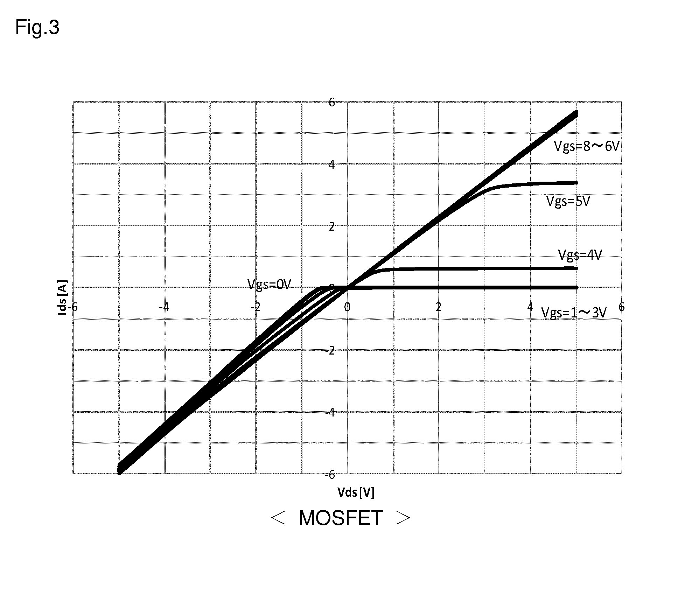

Fig. 2 shows an example of a static characteristic of a GaNFET of normally on type. In the GaNFET, because of its structure, the drain and the source are switched to each other in a region where a drain voltage is lower than a source voltage, and the GaNFET is turned on in a backward direction in a case where the voltage is lower than a threshold voltage of the gate. Besides, Fig. 3 shows an example of a static characteristic of a MOSFET. In a region where a drain voltage is lower than a source voltage, the MOSFET is turned on in a backward direction in a case where its voltage is lower than a forward voltage VF of a parasitic diode.

In the meantime, the switching element 3 is a switching element of a U-phase upper arm, the switching element 2 is a switching element of a V-phase upper arm, and the switching element 1 is a switching element of a W-phase upper arm. Besides, the switching element 6 is a switching element of a U-phase lower arm, the switching element 5 is a switching element of a V-phase lower arm, and the switching element 4 is a switching element of a W-phase lower arm.

The switching element of the upper arm and the switching element of the lower arm are connected in series between a positive electrode and a negative electrode of the DC power source 7. Besides, the motor 8 is connected between the switching element of the upper arm and the switching element of the lower arm.

Describing more specifically, the positive electrode of the DC power source 7 is connected to a positive electrode line L-p, and the negative electrode of the DC power source 7 is connected to a negative electrode line L-n. Besides, a U-phase terminal of the motor 8 is connected to a U-phase line L-u, a V-phase terminal of the motor 8 is connected to a V-phase line L-v, and a W-phase terminal of the motor 8 is connected to a W-phase line L-w.

And, as to the switching element 3, a drain terminal is connected to the positive electrode line L-p, and a source terminal is connected to a drain terminal of the switching element 6 and the U-phase line L-u. Besides, as to the switching element 2, a drain terminal is connected to the positive electrode line L-p, and a source terminal is connected to a drain terminal of the switching element 5 and the V-phase line L-v. Besides, as to the switching element 1, a drain terminal is connected to the positive electrode line L-p, and a source terminal is connected to a drain terminal of the switching element 4 and the W-phase line L-w. Besides, source terminals of the switching elements 4 to 6 are connected to the negative electrode line L-n.

The driver circuit unit 10 has a driver circuit group 11 for the upper arm and a driver circuit group 12 for the lower arm. In the meantime, the driver circuit group 11 for the upper arm includes: a driver circuit 11a that outputs a gate signal G-3 to the switching element 3; a driver circuit 11b that outputs a gate signal G-2 to the switching element 2; and a driver circuit 11c that outputs a gate signal G-1 to the switching element 1.

Besides, the driver circuit group 12 for the lower arm includes: a driver circuit 12a that outputs a gate signal G-6 to the switching element 6; a driver circuit 12b that outputs a gate signal G-5 to the switching element 5; and a driver circuit 12c that outputs a gate signal G-4 to the switching element 4. As described above, the driver circuit is disposed to correspond to each of the switching elements, and one driver circuit drives one switching element.

Besides, a control signal is input into each driver circuit from outside (e.g., from an upward control system of an electric apparatus that incorporates the inverter drive circuit INV-1).

More specifically, the control signal S-1u used for control of the switching element 3 of the U-phase upper arm is input into the driver circuit 11a from outside. The control signal S-1v used for control of the switching element 2 of the V-phase upper arm is input into the driver circuit 11b from outside. The control signal S-1w used for control of the switching element 1 of the W-phase upper arm is input into the driver circuit 11c from outside.

Besides, the control signal S-2u used for control of the switching element 6 of the U-phase lower arm is input into the driver circuit 12a from outside. The control signal S-2v used for control of the switching element 5 of the V-phase lower arm is input into the driver circuit 12b from outside. The control signal S-2w used for control of the switching element 4 of the W-phase lower arm is input into the driver circuit 12c from outside.

Besides, the driver circuit unit 10 is connected to the positive electrode line L-p and the negative electrode line L-n, and a voltage E-p of the positive electrode line L-p and a voltage E-n of the negative electrode line L-n are input into the driver circuit unit 10. In the meantime, the voltage E-p is a voltage of the drain terminal of each switching element 1 to 3 of the upper arm, and the voltage E-n is a voltage of the source terminal of each switching element 4 to 6 of the lower arm.

Besides, the driver circuit unit 10 is connected to each phase line, and a voltage E-u of the U-phase line L-u, a voltage E-v of the V-phase line L-v, and a voltage E-w of the W-phase line are input into the driver circuit unit 10.

In the meantime, it can be said that the voltage E-u is a voltage of the source terminal of the switching element 3 of the U-phase upper arm and a voltage of the drain terminal of the switching element 6 of the U-phase lower arm. Besides, it can be said that the voltage E-v is a voltage of the source terminal of the switching element 2 of the V-phase upper arm and a voltage of the drain terminal of the switching element 5 of the V-phase lower arm. Besides, it can be said that the voltage E-w is a voltage of the source terminal of the switching element 1 of the W-phase upper arm and a voltage of the drain terminal of the switching element 4 of the W-phase lower arm.

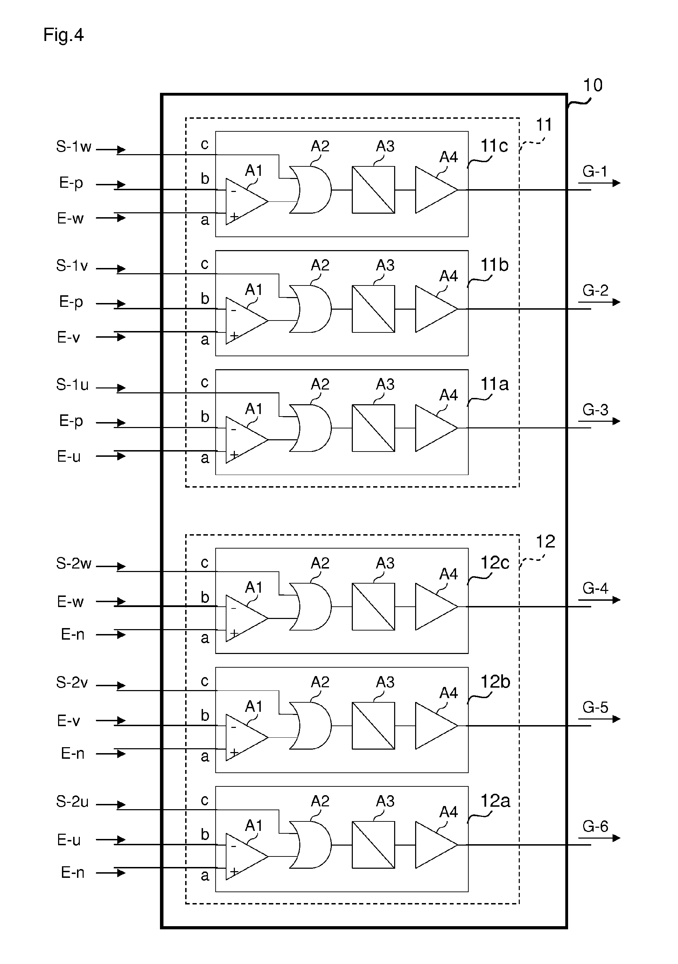

Fig. 4 is a more detailed structural view of the driver circuit unit 10. As shown in this figure, each driver circuit (11a to 11c, 12a to 12c) has a voltage comparison circuit A1, an OR circuit A2, a level shift circuit A3, and an output driver A4. Besides, each driver circuit has three terminals (a to c) into which a signal and the like are input.

In each driver circuit, a voltage input into the terminal a is sent to a non-inverting input terminal of the voltage comparison circuit A1, and a voltage input into the terminal b is sent to an inverting input terminal of the voltage comparison circuit A1. The voltage comparison circuit A1 outputs a H (High)-level signal when the voltage of the non-inverting input terminal is larger than the voltage of the inverting input terminal, and outputs a L (Low)-level signal in the other cases.

The OR circuit A2 has two input terminals, to one of which an output signal from the voltage comparison circuit A1 is sent, and to the other of which a signal input via the terminal c is sent. The OR circuit A2 outputs a H-level signal when at least one of the signals input into the respective input terminals is at a H-level, and outputs a L-level signal in the other cases.

The level shift circuit A3 adjusts a voltage level of the output signal from the OR circuit A2 to match an input voltage level for the output driver A4. In accordance with an output from the level shift circuit A3, the output driver A4 generates an output voltage (gate signal) to be given to the gate of the switching element. In this way, a gate signal is generated which turns on the switching element when the output signal from the OR circuit A2 is at the H level and turns off the switching element in the other cases. As described above, the driver circuit generates the gate signal based on a logical operation, which uses inputs of the control signal and the output signal from the voltage comparison circuit A1, and controls the switching element.

Besides, the voltage of the source terminal of the switching element corresponding to each driver circuit is input into the terminal a of the driver circuit. The voltage of the drain terminal of the switching element corresponding to each driver circuit is input into the terminal b of the driver circuit. The control signal corresponding to each driver circuit is input into the terminal c of the driver circuit.

In other words, as to the driver circuit 11c, the voltage E-w is input into the terminal a, the voltage E-p is input into the terminal b, and the control signal S-1w is input into the terminal c. As to the driver circuit 11b, the voltage E-v is input into the terminal a, the voltage E-p is input into the terminal b, and the control signal S-1v is input into the terminal c. As to the driver circuit 11a, the voltage E-u is input into the terminal a, the voltage E-p is input into the terminal b, and the control signal S-1u is input into the terminal c.

Besides, as to the driver circuit 12c, the voltage E-n is input into the terminal a, the voltage E-w is input into the terminal b, and the control signal S-2w is input into the terminal c. As to the driver circuit 12b, the voltage E-n is input into the terminal a, the voltage E-v is input into the terminal b, and the control signal S-2v is input into the terminal c. As to the driver circuit 12a, the voltage E-n is input into the terminal a, the voltage E-u is input into the terminal b, and the control signal S-2u is input into the terminal c.

Next, operation of the inverter drive circuit INV-1 is described with reference to a timing chart shown in Fig. 5.

As shown in Fig. 5, each control signal has a rectangular waveform signal in which a H level and a L level appear alternately. The H level indicates "on" (indication of an on-state) of the switching element, and the L level indicates "off" (indication of an off-state) of the switching element. The driver circuit (11a to 11c, 12a to 12c) basically performs control to turn on the switching element when the control signal indicates "on", and performs control to turn off the switching element when the control signal indicates "off."

The control signal S-1u is a signal that undergoes PWM modulation in a 0-120° section, the control signal S-1v is a signal that undergoes PWM modulation in a 120-240° section, and the control signal S-1w is a signal that undergoes PWM modulation in a 240-0° section. Besides, the control signal S-2u is a signal that undergoes PWM modulation in a 180-300° section, the control signal S-2v is a signal that undergoes PWM modulation in a 300-60° section, and the control signal S-2w is a signal that undergoes PWM modulation in a 60-180° section. In any control signal, the H level and the L level mingle with each other in accordance with the duty ratio in a section where the control signal undergoes PWM modulation, and the L level is always found in a section where the control signal does not undergo PWM modulation.

The gate signals are generated in accordance with these control signals and each switching element 1 to 6 performs the on/off switching, so that the U-phase voltage, V-phase voltage, and W-phase voltage shown in Fig. 5 are output to the U-phase terminal, V-phase terminal, and W-phase terminal of the motor 8, respectively. The U-phase voltage, the V-phase voltage, and the W-phase voltage are each approximated to a sine waveform and output; accordingly, it is possible to drive the motor 8.

Here, for example, looking at the U phase, in the nearly 120 to 180° section, a reflux current flows to the motor 8 via the U-phase line L-u. At this time, the voltage of the drain terminal of the switching element 6 is lower than the voltage of the source terminal (the voltage of the U-phase line L-u drops to a voltage lower than the voltage of the negative electrode terminal of the DC power source 7); accordingly, the voltage comparison circuit A1 of the driver circuit 12a outputs the H-level signal.

In this way, irrespective of content of the control signal S-2u, the H-level gate signal G-6 is output from the driver circuit 12a, and the switching element 6 goes to the on-state. As a result of this, the switching element 6 of the lower arm can flow the reflux current.

Besides, in the nearly 300 to 0° section, a reflux current flows from the motor 8 via the U-phase line L-u. At this time, the voltage of the source terminal of the switching element 3 is higher than the voltage of the drain terminal (the voltage of the U-phase line L-u rises to a voltage higher than the voltage of the positive electrode terminal of the DC power source 7); accordingly, the voltage comparison circuit A1 of the driver circuit 11a outputs the H-level signal.

In this way, irrespective of content of the control signal S-1u, the H-level gate signal G-3 is output from the driver circuit 11a, and the switching element 3 goes to the on-state. As a result of this, the switching element 3 of the upper arm can flow the reflux current. In the meantime, it can be said that a period, during which the voltage comparison circuit A1 outputs the H-level signal (i.e., a period during which a reverse in a level relationship between the potentials of the drain terminal and the source terminal is detected), is a period (on-control period) during which the switching element is controlled to go to the on-state irrespective of the content of the control signal.

It also applies to the V phase and the W phase that the switching elements of the upper arm and lower arm can flow the reflux current in this way. Here, the reflux current flows via on-resistance of the switching element, further the voltage comparison circuit A1 operates with a high sensitivity, so that it is possible to curb low the voltage by which the switching element is turned on.

The on-resistance of the switching element is sufficiently small; accordingly, a power loss occurring in the switching element at this time becomes small compared with the power loss when the reflux current flows in the FWD as in the conventional inverter drive circuit. Therefore, according to the inverter drive circuit INV-1 of the present embodiment, it is possible to curb the above first loss low compared with the conventional inverter circuit in which a reflux current flows in the FWD. Especially, in a case where the GaNFET and the like having a low on-resistance characteristic are employed, it is possible to remarkably reduce the first loss.

Besides, backward saturation currents in the MOSFET and GaNFET are small compared with the FWD. Therefore, according to the inverter drive circuit INV-1 of the present embodiment, it is possible to curb the above second loss low compared with the conventional inverter circuit in which a backward saturation current flows in the FWD. Especially, in a case where the GaNFET and the like having a good backward recovery characteristic are employed, it is possible to remarkably reduce the second loss.

### <Second embodiment>

Next, a second embodiment of the present invention is described. In the meantime, the second embodiment is basically the same as the first embodiment except for the portion relevant to the driver circuit unit. In the following description, there is a case where description is performed focusing on portions different from the first embodiment and common portions are not described. Besides, in drawings used for the description of the second embodiment, the same components as the first embodiment are indicated by the same reference numbers, and the same description is not repeated because the function and names are the same.

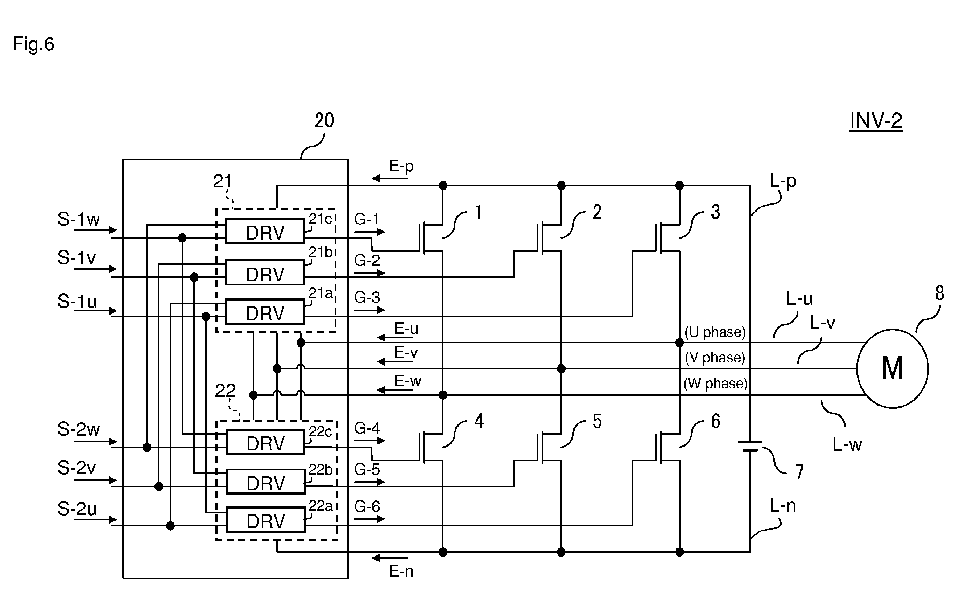

Fig. 6 is a structural view of a three-phase inverter drive circuit INV-2 according to the second embodiment. As shown in Fig. 6, the inverter drive circuit INV-2 includes each switching element 1 to 6, a driver circuit unit 20 and the like. The inverter drive circuit INV-2 is connected to the DC power source 7 and the motor 8, converts the DC voltage supplied from the DC power source 7 in to the AC, and outputs the AC to the motor 8 to drive the motor 8.

The driver circuit unit 20 has a driver circuit group 21 for the upper arm and a driver circuit group 22 for the lower arm. In the meantime, the driver circuit group 21 for the upper arm includes: a driver circuit 21a that outputs the gate signal G-3 to the switching element 3; a driver circuit 21b that outputs the gate signal G-2 to the switching element 2; and a driver circuit 21c that outputs the gate signal G-1 to the switching element 1.

Besides, the driver circuit group 22 for the lower arm includes: a driver circuit 22a that outputs the gate signal G-6 to the switching element 6; a driver circuit 22b that outputs the gate signal G-5 to the switching element 5; and a driver circuit 22c that outputs the gate signal G-4 to the switching element 4. As described above, the driver circuit is disposed to correspond to each of the switching elements, and one driver circuit drives one switching element.

The control signal S-1u used for the control of the switching element 3 of the U-phase upper arm, and the control signal S-2u used for the control of the switching element 6 of the U-phase lower arm are input into the driver circuit 21a, and the driver circuit 22a, respectively from outside.

Besides, the control signal S-1v used for the control of the switching element 2 of the V-phase upper arm, and the control signal S-2v used for the control of the switching element 5 of the V-phase lower arm are input into the driver circuit 21b, and the driver circuit 22b, respectively from outside.

Besides, the control signal S-1w used for the control of the switching element 1 of the W-phase upper arm, and the control signal S-2w used for the control of the switching element 4 of the W-phase lower arm are input into the driver circuit 21c, and the driver circuit 22c, respectively from outside.

Besides, the driver circuit unit 20 is connected to the positive electrode line L-p and the negative electrode line L-n, and the voltage E-p of the positive electrode line L-p and the voltage E-n of the negative electrode line L-n are input into the driver circuit unit 10. Besides, the driver circuit unit 20 is connected to each phase line, and the voltage E-u of the U-phase line L-u, the voltage E-v of the V-phase line L-v, and the voltage E-w of the W-phase line are input into the driver circuit unit 20.

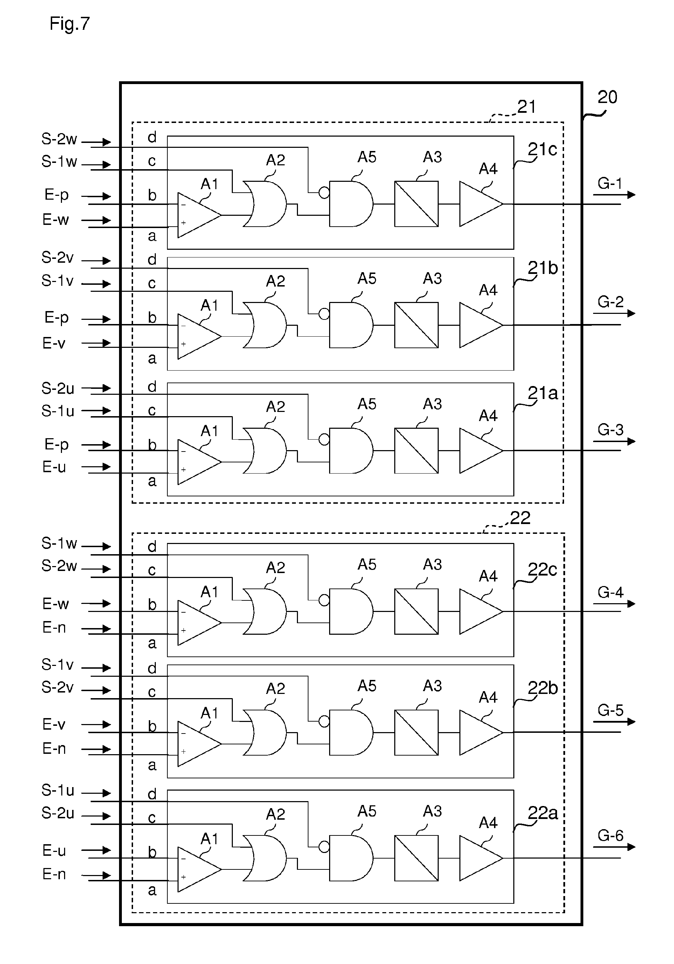

Fig. 7 is a more detailed structural view of the driver circuit unit 20. As shown in this figure, each driver circuit (21a to 21c, 22a to 22c) has the voltage comparison circuit A1, the OR circuit A2, the level shift circuit A3, the output driver A4, and an AND circuit A5. Besides, each driver circuit has four terminals (a to d) into which a signal and the like are input.

In each driver circuit, the voltage input into the terminal a is sent to the non-inverting input terminal of the voltage comparison circuit A1, and the voltage input into the terminal b is sent to the inverting input terminal of the voltage comparison circuit A1. As to the OR circuit A2, the output signal from the voltage comparison circuit A1 is sent to one input terminal, and the signal input via the terminal c is sent to the other input terminal.

The AND circuit A5 has two input terminals, to one of which the output signal from the OR circuit A2 is sent, and to the other of which a signal input via the terminal d is sent. In the meantime, the terminal d is a negative logic input terminal. Therefore, the AND circuit A5 outputs a H-level signal when the output signal from the OR circuit A2 is at the H level and the signal input into the terminal d is at the L level, and outputs a L-level signal in the other cases.

The level shift circuit A3 adjusts a voltage level of the output signal from the AND circuit A5 to match the input voltage level for the output driver A4. In accordance with the output from the level shift circuit A3, the output driver A4 generates an output voltage (gate signal) to be given to the gate of the switching element. In this way, a gate signal is generated which turns on the switching element when the output signal from the AND circuit A5 is at the H level and turns off the switching element in the other cases.

Besides, the voltage of the source terminal of the switching element corresponding to each driver circuit is input into the terminal a of the driver circuit. The voltage of the drain terminal of the switching element corresponding to each driver circuit is input into the terminal b of the driver circuit. The control signal corresponding to each driver circuit is input into the terminal c of the driver circuit. The control signal, which has the same phase as the switching element corresponding to each driver circuit and corresponds to the other (upside down) switching element, is input into the terminal d of the driver circuit.

In other words, as to the driver circuit 21c, the voltage E-w is input into the terminal a, the voltage E-p is input into the terminal b, the control signal S-1w is input into the terminal c, and the control signal S-2w is input into the terminal d. As to the driver circuit 21b, the voltage E-v is input into the terminal a, the voltage E-p is input into the terminal b, the control signal S-1v is input into the terminal c, and the control signal S-2v is input into the terminal d. As to the driver circuit 21a, the voltage E-u is input into the terminal a, the voltage E-p is input into the terminal b, the control signal S-1u is input into the terminal c, and the control signal S-2u is input into the terminal d.

Besides, as to the driver circuit 22c, the voltage E-n is input into the terminal a, the voltage E-w is input into the terminal b, the control signal S-2w is input into the terminal c, and the control signal S-1w is input into the terminal d. As to the driver circuit 22b, the voltage E-n is input into the terminal a, the voltage E-v is input into the terminal b, the control signal S-2v is input into the terminal c, and the control signal S-1v is input into the terminal d. As to the driver circuit 22a, the voltage E-n is input into the terminal a, the voltage E-u is input into the terminal b, the control signal S-2u is input into the terminal c, and the control signal S-1u is input into the terminal d.

In the second embodiment as well, the inverter drive circuit INV-2 is given each control signal shown in Fig. 5 and can drive the motor 8 in the same way as in the case of the first embodiment. Besides, the on/off switching of the switching element is controlled to flow the reflux current and the backward saturation current, so that it is possible to curb the first loss and the second loss compared with the conventional inverter drive circuit, which is also the same as in the case of the first embodiment.

And, further in the second embodiment, as to each phase, the control performed to flow the reflux current in the switching element of one of the upper and lower arms is performed only when the control signal for the switching element of the other of the upper and lower arms indicates the "off." Therefore, in the second embodiment, it is possible to prevent an arm short-circuit caused by an erroneous control signal and an unusual control waveform, and a safer inverter drive circuit and drive method are achieved.

In the meantime, it can be said that a period, during which the voltage comparison circuit A1 outputs the H-level signal and the L-level signal is input into the terminal d, is a period (on-control period) during which the switching element is controlled to be in the on-state irrespective of the content of the control signal.

### <Others>

As described above, the inverter drive circuit (INV-1, INV-2) according to each embodiment includes: the respective switching elements of the upper and lower arms connected in series between the positive electrode and the negative electrode of the DC power source 7; and the driver circuit that performs the on/off switching control of the switching element in accordance with the control signal given to each switching element.

In the meantime, the inverter drive circuit (INV-1, INV-2) according to each embodiment is based on the three-phase specifications, and has the respective switching elements (3, 6) of the U-phase upper and lower arms, the respective switching elements (2, 5) of the V-phase upper and lower arms and the respective switching elements (1, 4) of the W-phase upper and lower arms. However, the inverter drive circuit according to the present invention is not limited to the three-phase inverter drive circuit, but can also be put into practical use as a two-phase inverter drive circuit.

Besides, in the inverter drive circuit (INV-1, INV-2) according to each embodiment, the motor 8 (load) is connected to the connection point between the switching elements of the upper and lower arms, and the power from the DC power source 7 is converted into the AC by the on/off switching and supplied to the motor 8. Besides, the driver circuit compares the voltages of the respective terminals at both ends of the switching element, and performs the control based on the comparison result and the control signal.

The comparison result of the respective terminal voltages at both ends of the switching element is related to whether or not the switching element is in the state where the reflux current flows in the switching element. Therefore, according to the inverter drive circuit that controls the switching element in accordance with not only the control signal but also the comparison result, it is easy to flow the reflux current in the switching element. In this way, it becomes easy to give the function of the FWD to the switching element to remove the FWD and thereby to achieve reduction in the power loss caused by the reflux current and the like and curtailment of the number of components. Besides, when making it possible to remove the FWD, it is not always necessary to use the MOSFET that is improved in the backward recovery characteristic of the incorporated diode, and the restriction on the employable switching element is avoided as much as possible.

Besides, in the inverter drive circuit (INV-1, INV-2) according to each embodiment, more specifically, the driver circuit decides the on-control period based on the comparison result for each switching element, and turns on the switching element during the on-control period irrespective of the content of the control signal. In other words, the driver circuit performs the control for turning on the switching element during the on-control period by giving higher priority to the control than to the control based on the control signal. In this way, it is easy to decide the on-control period correspondingly to the period during which the reflux current flows and to flow the reflux current in the switching element.

More specifically, as to the switching element (1 to 3) of the upper arm, the driver circuit (11a to 11c) corresponding to the upper arm in the first embodiment decides the period, during which the voltage of the source terminal (terminal connected to the motor 8) is larger than the voltage of the drain terminal (terminal connected to the positive electrode of the DC power source 7), as the on-control period. In this way, it is possible to decide the on-control period as suitably as possible for the purpose of flowing the reflux current in the switching element (1 to 3).

Besides, as to the switching element (4 to 6) of the lower arm, the driver circuit (12a to 12c) corresponding to the lower arm in the first embodiment decides the period, during which the voltage of the source terminal (terminal connected to the negative electrode of the DC power source 7) is larger than the voltage of the drain terminal (terminal connected to the motor 8), as the on-control period. In this way, it is possible to decide the on-control period as suitably as possible for the purpose of flowing the reflux current in the switching element (4 to 6).

In the meantime, the driver circuit in the second embodiment reflects the content of the control signal for the switching element of the other one of the upper and lower arms into the decision of the on-control period for the switching element of one of the upper and lower arms.

More specifically, as to the switching element (1 to 3) of the upper arm, the driver circuit (21a to 21c) corresponding to the upper arm in the second embodiment decides the period, during which the voltage of the source terminal is larger than the voltage of the drain terminal and the control signal for the switching element of the lower arm indicates the "off", as the on-control period. In this way, it is possible to prevent an arm short-circuit caused by an erroneous control signal, an unusual control waveform and the like.

Besides, as to the switching element (4 to 6) of the lower arm, the driver circuit (22a to 22c) corresponding to the lower arm in the second embodiment decides the period, during which the voltage of the source terminal is larger than the voltage of the drain terminal and the control signal for the switching element of the upper arm indicates the "off", as the on-control period. In this way, it is possible to prevent an arm short-circuit caused by an erroneous control signal, an unusual control waveform and the like.

In the meantime, the embodiments described above are examples of the preferred embodiments of the present invention. The embodiments of present invention are not limited to these embodiments, but various modifications are possible without departing from the spirit of the present invention. Besides, a general technical application is considered when the present invention is put into practical use. For example, to prevent a pair of switching elements, which compose the upper and lower arms, from being turned on at the same time to go to a short-circuit state, it is considered to set a time lag (dead time) among the control signals for these switching elements and the like.

### Industrial Applicability

The present invention is applicable to an inverter drive circuit and the like that drive a two-phase or three-phase load.

### Reference Signs List

- 1, 2, 3, 4, 5, 6: switching element
- 7: DC power source
- 8: motor
- 10, 20, 30: driver circuit unit
- 11a, 11b, 11c: driver circuit for upper arm in first embodiment
- 12a, 12b, 12c: driver circuit for lower arm in first embodiment
- 21a, 21b, 21c: driver circuit for upper arm in second embodiment
- 22a., 22b, 22c: driver circuit for lower arm in second embodiment
- 31a, 31b, 31c: driver circuit for upper arm in conventional example
- 32a, 32b, 32c: driver circuit for lower arm in conventional example
- 41, 42, 43, 44, 45, 46: IGBT
- 51, 52, 53, 54, 55, 56: FWD
- INV-1, INV-2: inverter drive circuit
- A1: voltage comparison circuit
- A2: OR circuit
- A3, 47: level shift circuit
- A4, 48: output driver
- A5: AND circuit
- L-p: positive electrode line
- L-n: negative electrode line
- L-u: U-phase line
- L-v: V-phase line
- L-w: W-phase line

## Claims

1. An inverter drive circuit comprising:
respective switching elements of upper and lower arms connected in series between a positive electrode and a negative electrode of a DC power source,
a driver circuit that performs on/off switching control of the switching elements in accordance with a control signal given for each of the switching elements, wherein
a load is connected to a connection point between the switching elements of the upper and lower arms,
power from the DC power source is converted into an AC by the on/off switching and the AC is supplied to the load, and
the driver circuit compares voltages of respective terminals at both ends of the switching element and performs the control based on a result of the comparison and the control signal.

2. The inverter drive circuit according to claim 1, wherein
the driver circuit decides an on-control period for each of the switching elements based on the result of the comparison, and
turns on the switching element irrespective of content of the control signal during the on-control period.

3. The inverter drive circuit according to claim 2, wherein
as to the switching element of the upper arm, the driver circuit decides a period, during which a voltage of a terminal connected to the load is larger than a voltage of a terminal connected to the positive electrode of the DC power source, as the on-control period.

4. The inverter drive circuit according to claim 2 or claim 3, wherein
as to the switching element of the lower arm, the driver circuit decides a period, during which the voltage of the terminal connected to the negative electrode of the DC power source is larger than a voltage of a terminal connected to the load, as the on-control period.

5. The inverter drive circuit according to claim 2, wherein
the driver circuit performs control to turn on the switching element when the control signal indicates "on", and performs control to turn off the switching element when the control signal indicates "off", and
reflects the content of the control signal for the switching element of another one of the upper and lower arms into a decision of the on-control period for the switching element of one of the upper and lower arms.

6. The inverter drive circuit according to claim 5, wherein
as to the switching element of the upper arm, the driver circuit decides a period, during which the voltage of the terminal connected to the load is larger than the voltage of the terminal connected to the positive electrode of the DC power source and the control signal for the switching element of the lower arm indicates "off", as the on-control period.

7. The inverter drive circuit according to claim 5 or claim 6, wherein
as to the switching element of the lower, the driver circuit decides a period, during which the voltage of the terminal connected to the negative electrode of the DC power source is larger than the voltage of the terminal connected to the load and the control signal for the switching element of the upper arm indicates "off", as the on-control period.

8. The inverter drive circuit according to any one of claim 1 to claim 7, wherein
the switching element is an N type MOSFET that has a drain terminal and a source terminal as each of the terminals.

9. The inverter drive circuit according to any one of claim 1 to claim 7, wherein
the switching element is a N type GaNFET that has a drain terminal and a source terminal as each of the terminals.

10. The inverter drive circuit according to any one of claim 1 to claim 9, wherein
the driver circuit has a voltage comparison circuit that performs the comparison, and performs the control based on a logical operation that uses inputs of the control signal given from outside and an output signal from the voltage comparison circuit.
